Europäisches Patentamt

European Patent Office

Office européen des brevets

(11) Veröffentlichungsnummer: **0 276 669 B1**

## EUROPÄISCHE PATENTSCHRIFT

(45) Veröffentlichungstag der Patentschrift: **25.09.91**

(51) Int. Cl.⁵: **B23K 11/00, H01R 43/02**

(21) Anmeldenummer: **88100264.6**

(22) Anmeldetag: **11.01.88**

(54) Vorrichtung zum kontaktieren von Drähten oder Bändern durch Widerstandsschweissen.

(30) Priorität: **30.01.87 DE 3702822**

(43) Veröffentlichungstag der Anmeldung:
**03.08.88 Patentblatt 88/31**

(45) Bekanntmachung des Hinweises auf die Patenterteilung:
**25.09.91 Patentblatt 91/39**

(84) Benannte Vertragsstaaten:
**AT BE CH DE FR GB IT LI NL SE**

(56) Entgegenhaltungen:
**DE-C- 887 084**
**GB-A- 1 352 558**
**GB-A- 2 106 327**
**GB-A- 2 111 759**
**US-A- 4 339 651**

**FEINWERKTECHNIK, Band 73, Nr. 5, 1969, Seiten 209-216, München, DE; F. EICHHORN et al.: "Mikro-Widerstandspunktschweissen von Kupfer- und Nickelbändern"**

**FEINWERKTECHNIK, Band 75, Nr. 5, 1971, Seiten 201-206, München, DE; G. RITTER et al.: "Mikro-Widerstandsschweissen an Leiterplatten"**

(73) Patentinhaber: **Siemens Aktiengesellschaft**
**Wittelsbacherplatz 2**
**W-8000 München 2(DE)**

(72) Erfinder: **Fiedelius, Gerhard**
**Sudetenstrasse 21**
**W-8190 Wolfratshausen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zum Kontaktieren von Drähten oder Bändern an Anschlußelementen, insbesondere zur Herstellung von Drahtbrücken, durch Widerstandsschweißen mit parallel in geringem Abstand zueinander angeordneten Aufsetzelektroden.

Eine derartige Vorrichtung ist aus der Zeitschrift "Feinwerktechnik", 75. Jhrg., 1971, Seiten 201 bis 206, bekannt. Mit dem dort geschilderten Reparaturverfahren sollen bei der Herstellung von elektrischen Schaltungsplatten gelegentlich auftretende Fehler, die zu unzulässig weit eingeschnürten oder unterbrochenen Leiterbahnen führen, behoben werden. Sind diese Fehlerstellen erkannt, so werden vergoldete Feinbänder aus Nickel oder auch Feinbänder aus Kupfer darübergelegt und mit den Leiterbahnen metallisch verbunden. Da die elektrischen Schaltungsplatten nach dem Bestücken mit Bauteilen einem Lötprozeß unterworfen werden, wird die Reparatur der Leiterbahnen durch das Mikro-Widerstandsschweißen durchgeführt, bei welchem sichergestellt ist, daß durch die beim Löten auftretenden Temperaturen die Reparaturstellen keinen Schaden erleiden und sich die Verbindungen nicht wieder lösen.

In der Zeitschrift "Feinwerktechnik", 73. Jhrg., 1969, Seiten 209 bis 216 ist eine Arbeit veröffentlicht, welche die Einflußgrößen beim Mikro-Widerstandspunktschweißen von Kupfer- und Nickelbänden untersucht. Der Schweißkopf war dabei so ausgelegt, daß nicht nur mit direkter, sondern auch mit indirekter Elektrodenanordnung geschweißt werden konnte. Das Widerstandspunktschweißen mit indirekter, paralleler Elektrodenanordnung, das sogenannte Spaltschweißen, eignet sich besonders zum Kontaktieren von Kleinstbauteilen. Der Abstand der indirekt angeordneten Elektroden, die häufig auch als Aufsetzelektroden bezeichnet werden, betrug dabei bis zu 1 mm. Die Elektroden waren unabhängig voneinander über Federn mit dem Elektrodenarm verbunden. Dadurch wurden Unebenheiten der Werkstückoberfläche ausgeglichen und annähernd gleichmäßige Flächenpressungen zwischen Elektroden und Werkstück gewährleistet.

Bei der Herstellung von Kfz-Zündgeräten müssen Drahtbrücken zwischen Gehäuseanschlußfahnen und die zugeordneten Anschlüsse von Keramik-Dickschichtsubstraten eingeschweißt werden. Der maximale Höhenunterschied der einzelnen Verbindungspunkte beträgt dabei ca. 50 mm, wobei zusätzlich auch noch ein schräges Setzen der Drahtbrücken und eine schwingungssichere Verbindung mit hoher mechanischer und thermischer Belastbarkeit verlangt werden. Bislang wurden derartige Drahtbrücken durch Warzenschweißen von Feinblechbiegeteilen oder durch Widerstandsschweißen von vorgebogenen Drahteinzelstücken gemäß der DE-A-32 33 225 hergestellt.

Der Erfindung liegt die Aufgabe zugrunde, eine Vorrichtung zum Kontaktieren von Drähten oder Bändern durch Widerstandsschweißen zu schaffen, die eine der Verwendung von Feinblechbiegeteilen oder vorgebogenen Drahteinzelstücken hinsichtlich Zuverlässigkeit und Arbeitsproduktivität überlegene Vorgehensweise ermöglicht.

Diese Aufgabe wird bei einer Vorrichtung der eingangs genannten Art erfindungsgemäß dadurch gelöst, daß eine Aufsetzelektrode als Arbeitselektrode mit einem aus der den Anschlußelementen zugewandten Stirnseite ausmündenden Führungskanal für Drähte oder Bänder ausgebildet ist und daß die andere Aufsetzelektrode als unmittelbar auf die Anschlußelemente aufsetzbare reine Kontaktelektrode ausgebildet ist.

Der Erfindung liegt die Erkenntnis zugrunde, daß ein in der Arbeitselektrode geführter Draht oder ein in der Arbeitselektrode geführtes Band durch Widerstandsschweißen nach dem Aufsetzelektrodenverfahren auf beliebige Anschlußelemente aufgeschweißt werden können. Dabei können durch entsprechende vertikale Bewegungen der Arbeitselektrode zwischen Anschlußelementen verschiedener Höhenlagen Draht- oder Bandschlaufen bzw. Brücken gebildet werden, die schwingungsfeste Verbindungen gewährleisten. Ein weiterer Vorteil der erfindungsgemäßen Vorrichtung besteht darin, daß eine Güteüberwachung der Schweißverbindungen durch Messen des Nachsetzweges der Elektroden nach dem Schweißen ermöglicht wird. Hierzu sind insbesondere induktive Wegmessungen geeignet. Die Ausbildung der anderen Aufsetzelektrode als unmittelbar auf die Anschlußelemente aufsetzbare reine Kontaktelektrode ermöglicht eine besonders flexible Handhabung beider Elektroden. Außerdem ergibt sich hierdurch ein direkter Stromdurchgang durch die zu vereinigenden Berührungsstellen, die durch den elektrischen Widerstand des Werkstoffes auf Schweißtemperatur erwärmt werden.

Gemäß einer bevorzugten Ausgestaltung der Erfindung ist vor der Einmündung des Führungskanals in die Arbeitselektrode eine mit der Arbeitselektrode verfahrbare Klemmeinrichtung für Drähte oder Bänder angeordnet. Diese Klemmeinrichtung hat die Aufgabe, den Draht oder das Band während des Bewegungsvorganges der Aufsetzelektroden insbesondere von einer Vorratsrolle abzuspulen. Die Drahtklemmung ist dabei bis zum Anfahren des ersten Schweißpunktes geschlossen, vor dem Schweißen dieses Punktes wird sie dann geöffnet und nach dem Setzen des zweiten Schweißpunktes wieder geschlossen.

Eine besonders günstige Führung des Drahtes oder des Bandes ergibt sich, wenn der Führungskanal vertikal in Längsrichtung durch die Arbeitselektrode hindurchgeführt ist.

Es hat sich auch als besonders vorteilhaft erwiesen, wenn die Arbeitselektroden zumindest in ihrem stirnseitigen Bereich aus Wolfram besteht. Hierdurch ergibt sich eine hohe Elektrodenstandmenge.

Schließlich wird eine besonders zügige Herstellung von Drahtbrücken oder Bandbrücken dadurch erreicht, daß der Arbeitselektrode ein Schneidmesser zum Abtrennen des Drahtes oder Bandes zugeordnet ist. Jeweils nach dem Setzen des zweiten Schweißpunktes kann dann die Arbeitselektrode nach hinten verfahren werden, worauf das Schneidmesser den Draht oder das Band hinter der Schweißung abtrennt.

Ein Ausführungsbeispiel der Erfindung ist in der Zeichnung dargestellt und wird im folgenden näher beschrieben.

Es zeigen

Fig. 1        eine Vorrichtung zum Kontaktieren von Drähten in stark verein-fachter schematische Darstel-lung und die

Fig. 2 und 3    zwei Verfahrensstadien bei der Herstellung von Drahtbrücken mit der Vorrichtung gemäß Fig. 1.

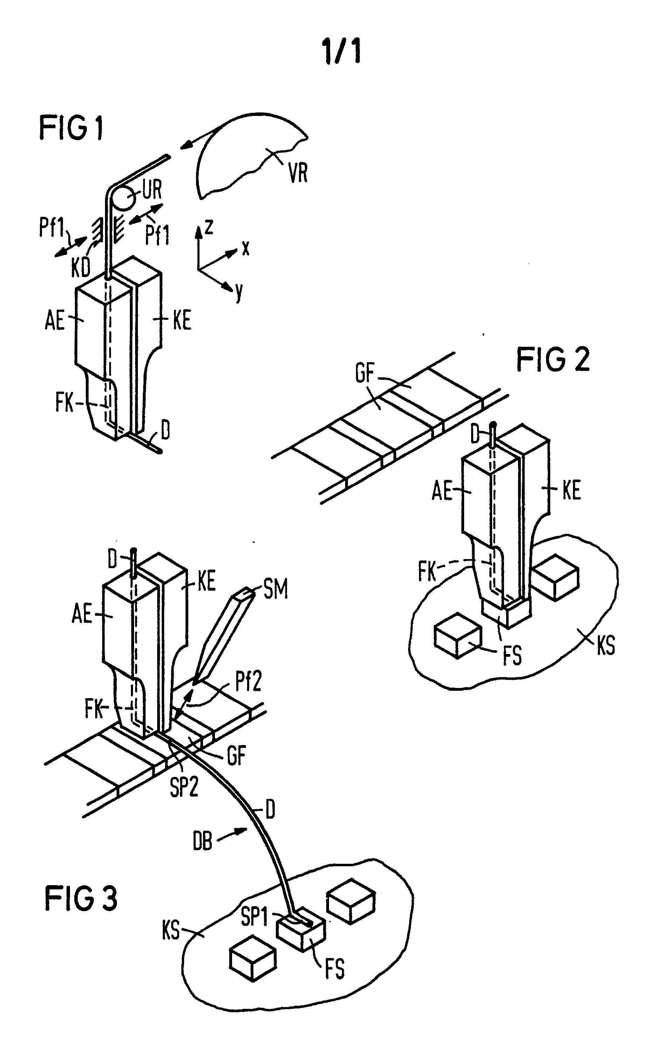

Fig. 1 zeigt zwei Aufsetzelektroden üblicher Bauform in indirekter, paralleler Elektrodenanordnung mit einem Elektrodenspalt von beispielsweise 0,2 mm. Die Elektrodenkräfte der beiden Aufsetzelektroden sind getrennt einstellbar. Im übrigen sind die beiden Aufsetzelektroden in einem nicht näher dargestellten Schweißkopf derart angeordnet, daß sie relativ zu einem Werkstück in den drei dargestellten Koordinatenrichtungen x, y, und z verfahren werden können.

Im Unterschied zu herkömmlichen Elektrodenanordnungen ist bei der in Fig. 1 im Prinzip dargestellten Vorrichtung eine Aufsetzelektrode als Arbeitselektrode AE ausgebildet, während die andere Aufsetzelektrode als reine Kontaktelektrode KE dient. In die Arbeitselektrode AE ist ein vertikal in Längsrichtung verlaufender, kreiszylindrischer Führungskanal FK eingebracht, der stirnseitig nach unten aus der aus Wolfram bestehenden Elektrodenspitze ausmündet. Durch diesen Führungskanal FK ist ein beispielsweise 0,4 mm starker und aus verzinntem Kupfer bestehender Draht D nach unten in z-Richtung hindurchgeführt und unmittelbar an der Ausmündung aus der unteren Stirnfläche rechtwinklig nach vorne in y-Richtung abgebogen. Die Zufuhr des Drahtes D erfolgt von einer Vorratsrolle VR über eine mit dem Schweißkopf bewegbare Umlenkrolle UR. Zwischen der Umlenkrolle UR und der Einmündung des Führungskanals FK befindet sich eine hier rein schematisch dargestellte Klemmeinrichtung KD für den Draht D. Die Backen dieser mit dem Schweißkopf verfahrbaren Klemmeinrichtung KD können geöffnet und geschlossen werden, so wie es durch die beiden Doppelpfeile Pf1 aufgezeigt ist. Die Klemmeinrichtung KD hat die Aufgabe den Draht D während des Bewegungsvorganges zur Bildung von Drahtbrücken oder Drahtschlaufen von der Vorratsrolle VR abzuziehen. Die Klemmung ist dabei jeweils bis zum Anfahren eines ersten Schweißpunktes geschlossen. Vor dem Schweißen dieses ersten Schweißpunktes wird die Klemmung dann geöffnet und nach dem Setzen eines zweiten Schweißpunktes wieder geschlossen.

Die Fig. 2 und 3 zeigen die Anwendung der in Fig. 1 dargestellten Vorrichtung bei der Herstellung von Drahtbrücken in Kfz-Zündgeräten. Gemäß Fig. 1 wird der durch die Arbeitselektrode AE hindurchgeführte und dann horizontal abgebogene Draht D durch Widerstandsschweißen zunächst auf die Anschlüsse eines Keramik-Dickschichtsubstrats KS aufgeschweißt. Dabei wird der Draht D mit der Elektrodenkraft der Arbeitselektrode AE von beispielsweise 2,5 N auf ein als Anschluß dienendes und aus einer Eisen-Nickel-Legierung bestehendes Formstück FS gedrückt, während die Kontaktelektrode KE unmittelbar daneben mit einer separat einstellbaren Elektrodenkraft von beispielsweise vier N direkt gegen das Formstück FS gedrückt wird. Es wird sodann der Schweißstrom eingeschaltet. Es fließt hierbei kurzfristig, d.h. beispielsweise 6 msec lang ein konstanter Strom von beispielsweise 1100 Ampere. Die zu vereinigenden Berührungsstellen des Drahtes D und des Formstückes FS werden dann durch den elektrischen Widerstand des Werkstoffes auf Schweißtemperatur erwärmt, wobei der in Fig. 3 erkennbare erste Schweißpunkt SP1 gebildet wird.

Nach dem Hochfahren der Arbeitselektrode AE und der Kontaktelektrode KE auf die Höhe von Gehäuseanschlußfahnen GF wird mit Hilfe eines Verfahrprogrammes für den Schweißkopf eine Schlaufe bzw. Drahtbrücke DB gebildet und der Draht in der bereits beschriebenen Weise mit der zugeordneten Gehäuseanschlußfahne GF verschweißt, wobei der zweite Schweißpunkt in Fig. 3 mit SP2 bezeichnet ist. Die Arbeitselektrode AE fährt dann zusammen mit der Kontaktelektrode KE in der horizontalen y-Richtung nach hinten und ein mit SM bezeichnetes Schneidemesser trennt den Draht D hinter dem zweiten Schweißpunkt SP2 ab. Die Betätigung des im Schweißkopf gehalterten Schneidmessers SM ist dabei durch einen Doppelpfeil Pf2 aufgezeigt. Der Draht D liegt durch das Verfahrprogramm bereits wieder horizontal abgewinkelt unter der Arbeitselektrode AE und der nächste Schweißpunkt auf dem Keramik-Dickschichtsubstrat KS kann dann zur Bildung der nächsten Drahtbrücke DB angefahren werden.

## Patentansprüche

1. Vorrichtung zum Kontaktieren von Drähten oder Bändern an Anschlußelementen, insbesondere zur Herstellung von Drahtbrücken, durch Widerstandsschweißen mit parallel in geringem Abstand zueinander angeordneten Aufsetzelektroden,
   **dadurch gekennzeichnet,**
   daß eine Aufsetzelektrode als Arbeitselektrode (AE) mit einem aus der den Anschlußelementen zugewandten Stirnseite ausmündendem Führungskanal (FK) für Drähte (D) oder Bänder ausgebildet ist und
   daß die andere Aufsetzelektrode als unmittelbar auf die Anschlußelemente (GF, FS) aufsetzbare reine Kontaktelektrode (KE) ausgebildet ist.

2. Vorrichtung nach Anspruch 1,
   **dadurch gekennzeichnet,**
   daß vor der Einmündung des Führungskanals (FK) in die Arbeitselektrode (AE) eine mit der Arbeitselektrode (AE) verfahrbare Klemmeinrichtung (KD) für Drähte (D) oder Bänder angeordnet ist.

3. Vorrichtung Anspruch 1 oder 2,
   **dadurch gekennzeichnet,**
   daß die in dem Führungskanal (FK) eingeführten Drähte (D) oder Bänder von einer Vorratsrolle (VR) abspulbar sind.

4. Vorrichtung nach einem der vorhergehenden Ansprüche,
   **dadurch gekennzeichnet,**
   daß der Führungskanal (FK) vertikal in Längsrichtung durch die Arbeitselektrode (AE) hindurchgeführt ist.

5. Vorrichtung nach einem der vorhergehenden Ansprüche,
   **dadurch gekennzeichnet,**
   daß die Arbeitselektrode (AE) zumindest in ihrem stirnseitigen Bereich aus Wolfram besteht.

6. Vorrichtung nach einem der vorhergehenden Ansprüche,
   **dadurch gekennzeichnet,**
   daß der Arbeitselektrode (AE) ein Schneidmesser (SM) zum Abtrennen des Drahtes (D) oder Bandes zugeordnet ist.

## Claims

1. Device for contacting wires or strips to terminal elements, preferably for producing wire bridges, by resistance welding using pressure electrodes disposed parallel to one another at a slight distance, characterised in that one pressure electrode is formed as a working electrode (AE) including a guide channel (FK) for wires (D) or strips which discharges from the end facing towards the terminal elements, and in that the other pressure electrode is formed as a pure contact electrode (KE) that can be placed directly onto the terminal elements (GF, FS).

2. Device according to Claim 1, characterised in that a clamping device (KD) for wires (D) or strips, that can be moved with the working electrode (AE), is arranged preceding the admission opening of the guide channel (FK) into the working electrode (AE).

3. Device according to Claim 1 or 2, characterised in that the wires (D) or strips introduced into the guide channel (FK) can be unreeled from a supply reel (VR).

4. Device according to one of the preceding claims, characterised in that the guide channel (FK) is led vertically through the working electrode (AE) in the longitudinal direction.

5. Device according to one of the preceding claims, characterised in that the working electrode (AE) is composed of tungsten at least in the region of its end face.

6. Device according to one of the preceding claims, characterised in that a cutter blade (SM) is allocated to the working electrode (AE) for severing the wire (D) or strip.

## Revendications

1. Dispositif pour établir la connexion de fils ou de bandes à des éléments de raccordement, notamment pour fabriquer des étriers en fil, au moyen d'un soudage par résistance utilisant des électrodes d'application parallèle entre elles et à une faible distance réciproque, caractérisé par le fait qu'une électrode d'application est réalisée sous la forme d'une électrode de travail (AE) comportant un conduit (FK) de guidage pour des fils (D) ou des bandes, qui débouche dans la face frontale tournée vers les éléments de raccordement, et que l'autre électrode d'application est réalisée sous la forme d'une pure électrode de contact (KE) pouvant être appliquée directement sur les éléments de raccordement (GF,FS).

2. Dispositif suivant la revendication 1, caractérisé par le fait qu'en amont de l'endroit où le canal de guidage (FK) débouche dans l'électrode de travail (AE), est disposé un dispositif (KD) de serrage des fils (D) ou des bandes, déplaçable avec l'électrode de travail (AE).

3. Dispositif suivant la revendication 1 ou 2, caractérisé par le fait que les fils (D) ou les bandes, qui sont introduites dans le canal de guidage (FK) peuvent être déroulés d'un rouleau débiteur (VR).

4. Dispositif suivant l'une des revendications précédentes, caractérisé par le fait que le canal de guidage (FK) pénètre verticalement, dans la direction longitudinale, dans l'électrode de travail (AE).

5. Dispositif suivant l'une des revendications précédentes, caractérisé par le fait que l'électrode de travail (AE) est constituée par du tungstène, au moins dans la zone de sa face frontale.

6. Dispositif suivant l'une des revendications précédentes, caractérisé par le fait qu'à l'électrode de travail (AE) est associé un couteau (SM) servant à sectionner le fil (D) ou la bande.

FIG 1

FIG 2

FIG 3